Europäisches Patentamt

European Patent Office

Office européen des brevets

(19)

(11) Numéro de publication: **0 186 537**
**B1**

(12) # FASCICULE DE BREVET EUROPEEN

(45) Date de publication du fascicule du brevet:
30.03.88

(51) Int. Cl.⁴: **F 16 D  65/56,** F 16 D  55/224

(21) Numéro de dépôt: **85402195.3**

(22) Date de dépôt: **13.11.85**

(54) **Frein à disque.**

(30) Priorité: **21.11.84 FR 8417729**

(43) Date de publication de la demande:
**02.07.86 Bulletin 86/27**

(45) Mention de la délivrance du brevet:
**30.03.88 Bulletin 88/13**

(84) Etats contractants désignés:
**DE GB IT**

(56) Documents cités:
**DE - A - 2 707 124**
**FR - A - 1 317 919**
**FR - A - 2 300 937**
**US - A - 4 228 875**

(73) Titulaire: **BENDIX France, 126, rue de Stalingrad,**
**F-93700 Drancy (FR)**

(72) Inventeur: **Meynier, Guy, 58, rue de Reims,**
**F-93600 Aulnay-sous-Bois (FR)**

(74) Mandataire: **Brullé, Jean, Division Technique Service**
**Brevets Bendix Europe 126, rue de Stalingrad,**
**F-93700 Drancy (FR)**

EP 0 186 537 B1

## Description

L'invention se rapporte à un frein à disque notamment destiné à équiper un véhicule automobile.

L'invention concerne en particulier un frein à disque à étrier coulissant sur un support fixe comportant un premier élément de friction susceptible d'être appliqué sur une face d'un disque de freinage au moyen d'un moteur de frein au travers d'un poussoir et un deuxième élément de friction susceptible d'être appliqué sur l'autre face du disque au travers de l'étrier coulissant.

On connaît de nombreux freins à disque de ce type dont certains comportent un dispositif permettant le déplacement axial du poussoir par rapport au moteur de frein en particulier lorsque ce poussoir subit une rotation sur lui-même. Un frein de ce type est décrit dans le brevet français N° 1 317 919 dans lequel le poussoir est formé par le piston du moteur de frein et dont la rotation permet d'avancer ou de reculer ce piston. Ce brevet en outre montre un dispositif de réglage automatique qui fonctionne correctement lorsque le piston est empêché de tourner et ceci lors du fonctionnement normal du frein. On remarquera que le recul du piston peut être obtenu soit en tournant la vis après avoir démonté le levier ce qui nécessite des interventions complémentaires ou bien on peut agir sur le piston après avoir retiré les éléments de friction. L'une et l'autre de ces opérations présentent des inconvénients difficiles ou impossibles à surmonter, on citera par exemple le cas de l'arrière du moteur de frein inaccessible par exemple lorsque la commande mécanique est assurée par un copin, et l'impossibilité de démonter les éléments de friction lorsque le disque de freinage est usé et présente sur sa périphérie extérieure une collerette qui s'oppose au démontage des éléments de friction.

L'invention propose un frein à disque de construction simple et ne comportant pas les inconvénients mentionnés ci-dessus.

Dans ce but, l'invention propose un frein à disque à étrier coulissant sur un support fixe comportant un premier élément de friction susceptible d'être appliqué sur une face d'un disque de freinage au moyen d'un moteur de frein au travers d'un poussoir et un deuxième élément de friction susceptible d'être appliqué sur l'autre face du disque au travers de l'étrier coulissant, la rotation dudit poussoir étant susceptible de déplacer celui-ci axialement par rapport au moteur de frein caractérisé en ce que le frein comporte un organe de réglage et de retenue présentant à une de ses extrémités une fourche destinée à coopérer avec des surfaces complémentaires formées sur ledit poussoir et présentant à l'autre de ses extrémités un orifice au moyen duquel ledit organe est immobilisé, au travers d'un moyen amovible, par rapport audit premier élément de friction.

Il apparaît que grâce à ces caractéristiques, en fonctionnement normal du frein, l'organe de réglage et de retenue interdit la rotation du poussoir, et après démontage du moyen amovible l'organe de réglage et de retenue permet d'assurer la rotation du poussoir grâce à la coopération de la fourche et des surfaces complémentaires du poussoir.

Ce dispositif permet également d'assurer un pré-réglage manuel du frein et éviter une course excessive du moteur de frein après remplacement des éléments de friction par exemple.

On décrira maintenant à titre d'exemple non limitatif un mode de réalisation de l'invention en se référant aux dessins annexés dans lesquels:

la fig. 1 est une vue de dessus avec découpe partielle d'un frein à disque réalisé conformément à l'invention;

la fig. 2 est une vue en coupe selon la ligne 2-2 du frein de la fig, 1;

la fig. 3 est une vue partielle selon la flèche A de la fig. 2; et

la fig. 4 est une vue partielle en coupe selon la ligne 4-4 de la fig. 2.`

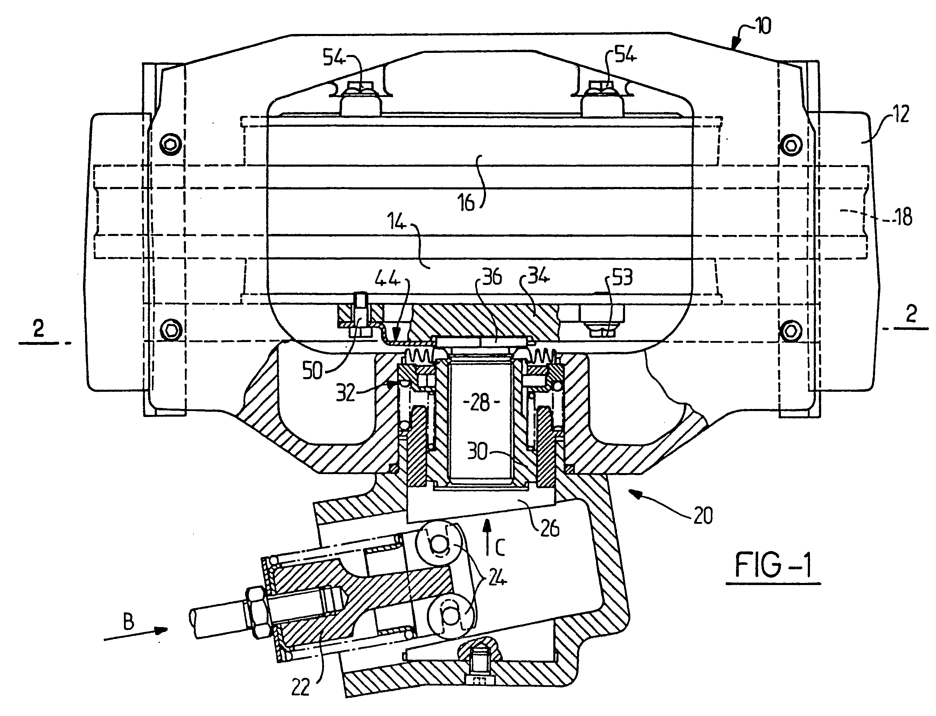

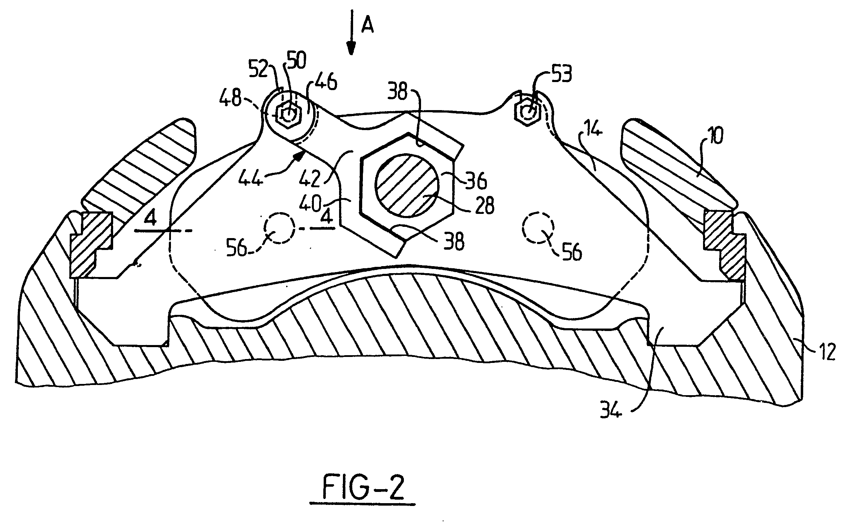

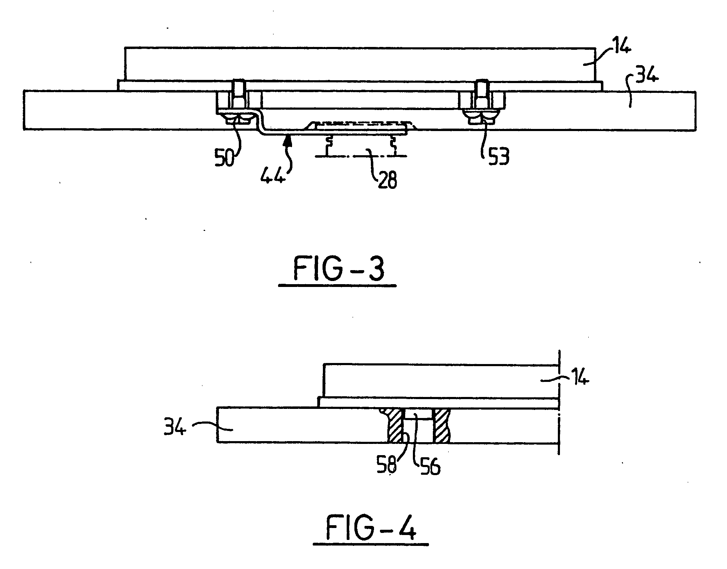

Le frein à disque représenté sur les figures 1 et 2 comporte un étrier désigné dans son ensemble par la référence 10 coulissant sur un support fixe 12 associé à une partie fixe du véhicule (non représentée). Le frein à disque comporte deux éléments de friction 14 et 16 placés de part et d'autre d'un disque de freinage 18. L'étrier 10 comporte un moteur de frein désigné dans son ensemble par la référence 20, ce moteur de frein est du type à commande à coin, c'est à dire quil comporte un coin 27 susceptible d'être déplacé dans le sens de la flèche B sous l'effet d'un vérin par exemple, ce déplacement dans le sens de la flèche B au travers des galets 24 sollicite une pièce coulissante 26 dans le sens de la flèche C. Cette pièce coulissante 26 est susceptible de déplacer dans le sens de la flèche C un poussoir fileté 28 au travers d'un écrou 30. Le moteur de frein 20 est équipé en outre d'un dispositif de réglage automatique désigné dans son ensemble par la référence 32, ce réglage automatique peut être du type de celui décrit dans le brevet français 1 317 919, ce réglage automatique ne sera pas décrit davantage. Le poussoir 28 est susceptible de solliciter un premier élément de friction 14 au travers d'une semelle de renforcement 34 au moyen d'une portion 36 placée du côté de l'élément de friction 14 et présentant la forme d'une tête hexagonale. Cette tête hexagonale présente 3 paires de deux côtés opposés 38, formant surfaces complémentaires, avec lesquels coopère une fourche 40 formée à une extrémité 42 d'un organe de réglage et de retenue désigné dans son ensemble par la référence 44. Cet organe de retenue 44 comporte à son autre extrémité 46 un orifice 48 au travers duquel passe une vis 50 vissé dans l'élément de friction 14 et traversant une ouverture oblongue 52 formée dans la semelle 34. Le diamètre de l'orifice 49 est légèrement inférieur au diamètre de la partie filetée de la vis 50. On notera par ailleurs que l'ouverture oblongue 52 débouche sur le bord périphérique externe de la semelle 34. La vis 50 forme un moyen amovible. En se reportant aux figures 1, 2 et 3 on voit que l'élément de friction 14 est fixé à la semelle 34 au moyen d'une deuxième vis 53, de même le deuxième élément de friction 16 est fixé à l'étrier 10 au moyen de deux vis 54. En se reportant aux figures 2 et 4 on voit que outre les vis 50, 53 et 54 les éléments de friction 14 et 16 comportent des pions 56 qui pénètrent dans des ouvertures 58 formées soit sur la semelle 34 pour l'élément de friction 14 soit sur l'étrier 10 pour l'élément de friction 16. Ces pions 56 en coopérant avec les ouvertures 58 permettent de transferrer les efforts de freinage respectivement sur la semelle 34 et sur l'étrier 10.

Le frein qui vient d'être décrit à l'aide des figures 1 à 4 fonctionne de la manière suivante:

Lorsqu'un effort est appliqué dans le sens de la flèche B sur le coin 22, celui-ci se déplace également dans le sens de la flèche B et exerce au travers des galets 24 un effort dans le sens de la flèche C sur la pièce coulissante 26. Cette pièce déplace également dans le sens de la flèche C l'écrou 30 et le poussoir 28 au travers de la liaison filetée entre ces deux derniers éléments. Le poussoir 28 par sa portion 36 déplace également dans le sens de la flèche C la semelle 34 et l'élément de friction 14 qui lui est associé. Ce déplacement applique l'élément de friction 14 sur le disque 18 et par réaction au travers de l'étrier coulissant 10 applique l'élément de friction 16 sur l'autre face du disque 18. Au relâchement du freinage les différents éléments reprennent leur position représentée sur la fig. 1.

Lorsque l'on veut changer les éléments de friction 14 et 16 on procède de la manière suivante:

Dans un premier temps on dévisse la vis 50 et à l'aide de l'organe de réglage et de retenue 44 utilisé comme une clé plate on revisse le poussoir 28 à l'intérieur de son écrou 30 en se servant de la portion 36 formant tête hexagonale. Ce déplacement du poussoir 28 dans le sens contraire de la flèche C permet de dégager les pions 56 des ouvertures 58 formées sur la semelle 34 ceci après avoir déposé la vis 53. L'élément de friction 14 peut alors être extrait du frein au travers de l'ouverture formée sur l'étrier 10 en inclinant légèrement cet élément de friction 14 pour permettre son passage. En déplaçant l'étrier dans le sens de la flèche C et en déposant les deux vis 54 on peut de même extraire l'élément de friction 16. Après le remplacement de l'élément de friction 16 on revisse les vis 54 puis on déplace l'étrier dans le sens inverse de la flèche C et on met en place l'élément de friction 14, on visse la vis 53 maintenant cet élément de friction 14 sur la semelle 34. A l'aide de l'organe de réglage et de retenue 44 on dévisse le poussoir 28 de manière à l'amener au contact de la semelle 34 ce qui permet de rattraper les jeux, on fixe alors la vis 50 dans l'élément de friction 14 ce qui a pour effet d'une part de maintenir l'élément de friction 14 en appui sur la semelle 34 de même que le faisait la vis 53 et d'autre part au moyen de la fourche 40 formée sur l'organe 44 d'immobiliser le poussoir 28 et donc d'éviter toute rotation incontrôlée de ce poussoir. Cette immobilisation est d'autant plus importante dans le cas où le moteur de frein comporte un réglage automatique 32 où le fonctionnement de ce réglage dépend essentiellement de la non rotation du poussoir 28.

On notera que grâce à l'invention, l'immobilisation du poussoir 36 est très simple et permet une intervention manuelle lorsque celà est nécessaire avec un outil approprié disponible en permanence sur le frein. On notera également que la vis 50 étant prisonnière de l'organe de réglage de retenue 44 les risques d'oubli de montage de la vis 50 sont supprimés.

## Revendications

1. Frein à disque à étrier (10) coulissant sur un support fixe (12) comportant un premier élément de friction (14) susceptible d'être appliqué sur une face d'un disque de freinage (18) au moyen d'un moteur de frein (20) au travers d'un poussoir (28) et un deuxième élément de friction (16) susceptible d'être appliqué sur l'autre face du disque (18) au travers de l'étrier coulissant (10), la rotation dudit poussoir (28) étant susceptible de déplacer celui-ci axialement par rapport au moteur de frein (20) caractérisé en ce que le frein comporte un organe de réglage et de retenue (44) présentant à une (42) de ses extrémités une fourche (40) destinée à coopérer avec des surfaces complémentaires (38) formées sur ledit poussoir (28) et présentant à l'autre (46) de ses extrémités un orifice (48) au moyen duquel ledit organe (44) est immobilisé, au travers d'un moyen amovible (50), par rapport audit premier élément de friction (14).

2. Frein à disque selon la revendication 1, caractérisé en ce que ledit poussoir (28) présente une portion (36) placée du côté du premier élément de friction (14) en forme de tête hexagonale et en ce que ladite fourche (40) coopère avec deux côtés opposés (38) de ladite tête.

3. Frein à disque selon la revendication 1 ou 2, caractérisé en ce que ledit moyen amovible (50) est une vis passant par ledit orifice (48) vissée dans ledit premier élément de friction (14).

4. Frein à disque selon l'une des revendications précédentes, caractérisé en ce que ledit moyen amovible (50) maintient ledit premier élément de friction (14) en appui sur une semelle de renforcement (34).

5. Frein à disque selon la revendication 4, caractérisé en ce que la semelle (34) présente une ouverture oblongue (52) débouchant sur un bord périphérique externe permettant le passage radial de ladite vis (50) lorsque celle-ci est désolidarisée du premier élément de friction (14).

6. Frein à disque selon la revendication 5, caractérisé en ce que ladite vis (50) et ledit organe de réglage et de retenue (44) forment un sous-ensemble démontable en bloc.

## Patentansprüche

1. Schwimmsattel-Scheibenbremse mit einem ersten Reibglied (14), das gegen eine Seite einer Bremsscheibe (18) durch einen Bremsmotor (12) über einen Stössel (28) andrückbar ist, und einem zweiten Reibglied (16), das gegen die andere Seite der Bremsscheibe (18) über den Schwimmsattel (10) andrückbar ist, wobei die Drehung des Stössels (28) diesen axial bezüglich des Bremsmotors (20) verstellt, dadurch gekennzeichnet, dass die Bremse ein Regel- und Halteglied (44) aufweist, das in einem (42) seiner Enden eine Gabel (40) besitzt, die mit komplementären Flächen (38) am Stössel (28) zusammenwirkt, und die am anderen (46) seiner Enden eine Öffnung (48) aufweist, mit deren Hilfe das Glied (44) über ein entfernbares Teil (50) bezüglich des ersten Reibgliedes (14) festgelegt wird.

2. Scheibenbremse nach Anspruch 1, dadurch gekennzeichnet, dass der Stössel (28) seitlich zu dem ersten Reibglied (14) einen Abschnitt (36) in Form eines Sechseckkopfes aufweist und dass die Gabel (40) mit zwei gegenüberliegenden Seiten (38) dieses Kopfes zusammenwirkt.

3. Scheibenbremse nach Anspruch 1 oder 2, dadurch gekennzeichnet, dass das lösbare Teil (50) eine durch die Öffnung (48) verlaufende Schraube ist, die in das erste Reibglied (14) eingeschraubt ist.

4. Scheibenbremse nach einem der vorhergehenden Ansprüche, dadurch gekennzeichnet, dass das lösbare Teil (50) das erste Reibglied (14) in Anlage mit einer Verstärkungsscheibe (34) hält.

5. Scheibenbremse nach Anspruch 4, dadurch gekennzeichnet, dass die Scheibe (34) eine längliche Öffnung (52) aufweist, die an einem äusseren Umfangsrand mündet, wodurch sie den radialen Durchtritt der Schraube (50) erlaubt, wenn diese von dem ersten Reibglied (14) gelöst wird.

6. Scheibenbremse nach Anspruch 5, dadurch gekennzeichnet, dass die Schraube (50) und das Regel- und Halteglied (44) eine als Block lösbare Baueinheit bilden.

**Claims**

1. Disc brake with a caliper (10) sliding on a fixed support (22) incorporating a first friction component (14) which is capable of being applied against a surface of a brake disc (18) by means of a brake actuator (20) through a plunger (28), and a second friction component (16) which is capable of being applied against the other surface of the disc (18) through the sliding caliper (10), rotation of the said plunger (28) being capable of moving the latter axially relative to the brake actuator (20), characterized in that the brake incorporates an adjusting and retaining component (44) having a fork (40) at one of its ends (42) which is intended to co-operate with complementary surfaces (38) formed on the said plunger (28) and having a hole (48) at its other end (46) by means of which the said component (44) is immobilised, through a removable means (50), relative to the said first friction component (14).

2. Disc brake according to claim 1, characterized in that the said plunger (28) has a portion (36) which is positioned on the same side as the first friction component (14) and has the shape of a hexagonal head, and in that the said fork (40) co-operates with two opposite sides (38) of the said head.

3. Disc brake according to claim 1 or claim 2, characterized in that the said removable means (50) is a screw which passes through the said hole (48) and is screwed into the first friction component (14).

4. Disc brake according to one of the preceding claims, characterized in that the said removable means (50) holds the said first friction component (14) against a reinforcing pad (34).

5. Disc brake according to claim 4, characterized in that the pad (34) has an oblong opening (52) which opens out on an external peripheral edge and allows the said screw (50) to pass through radially when the latter is disengaged from the first friction component (14).

6. Disc brake according to claim 5, characterized in that the the said screw (50) and the said adjusting and retaining component (44) form a sub-assembly which is removable as a unit.

FIG-1

FIG-2

FIG-3

FIG-4

0 186 537